Europäisches Patentamt

European Patent Office

Office européen des brevets

(11) Publication number: **0 073 962**
**B1**

# (12) EUROPEAN PATENT SPECIFICATION

(45) Date of publication of patent specification: **19.02.86**

(21) Application number: **82107442.4**

(22) Date of filing: **16.08.82**

(51) Int. Cl.⁴: **F 16 G 5/16**

(54) **Transmission v-belt.**

(30) Priority: **24.08.81 JP 131594/81**

(43) Date of publication of application:
**16.03.83 Bulletin 83/11**

(45) Publication of the grant of the patent:
**19.02.86 Bulletin 86/08**

(84) Designated Contracting States:
**DE FR GB IT**

(56) References cited:
**EP-A-0 014 013**
**DE-A-2 557 724**
**GB-A- 655 173**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Abo, Keiju**
**No. 3-68, Oppama-Higashicho**
**Yokosuka City (JP)**
Inventor: **Tanaka, Yoshikazu**
**No. 1486, Tomioka-cho**
**Kanazawa-ku Yokohama City (JP)**
Inventor: **Hirano, Hiroyuki**
**No. 3-68, Oppama-higashicho**
**Yokosuka City (JP)**
Inventor: **Yamamuro, Shigeaki**
**No. 3-4-11, Ikego**
**Zushi City (JP)**
Inventor: **Morimoto, Yoshiro**
**No. 3-8-15, Shonan-takatori**
**Yokosuka City (JP)**
Inventor: **Tsuda, Yoshiki**
**No. 4-1-15, Nishitsuruma**
**Yamato City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a transmission V-belt of the kind constructed of a plurality of trapezium-shaped blocks arranged in face-to-face abutting relationship and transversely mounted on an endless band.

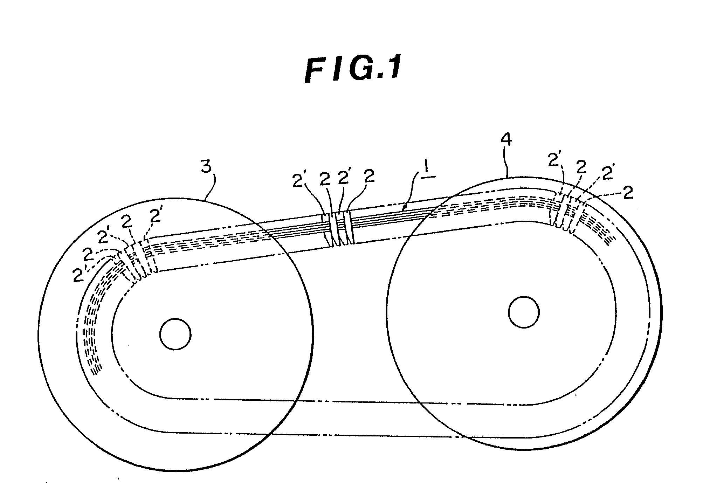

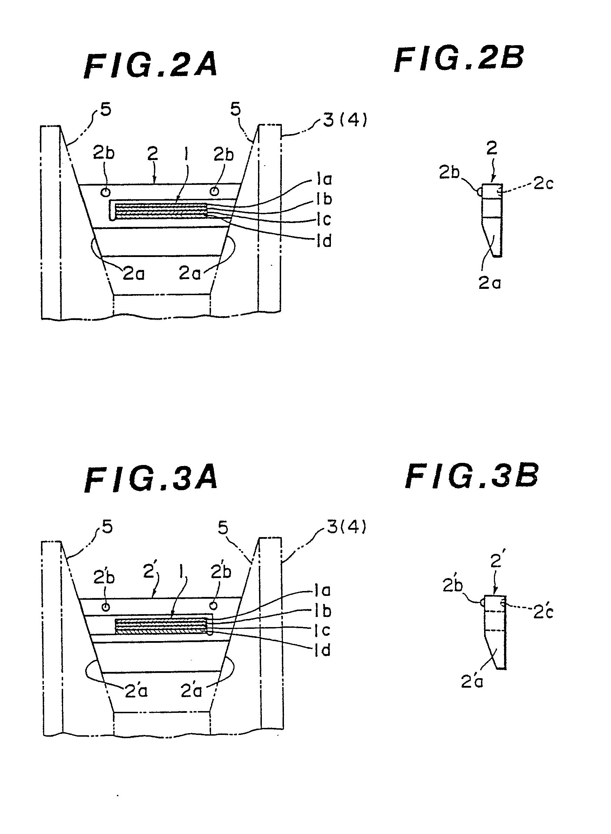

Japanese Patent Application Publication No. Sho 55-100443, which corresponds to U.S. Pat. No. 4,303,403, discloses in Figs. 1 and 2 thereof a plate-like transverse element or a trapezium-shaped block formed with a three-sided slot for receiving an endless belt. The trapezium-shaped block has two projections on one of head side surfaces thereof and two recesses on the other head side surface thereof for centering purpose.

Figs. 1 through 3B of the accompanying drawings of the present application show a transmission V-belt employing a plurality of trapezium-shaped blocks as disclosed in Figs. 1 and 2 of U.S. Pat. No. 4,303,403. As shown in Fig. 1, the transmission V-belt includes an endless band 1 constructed of a plurality of metal strips superimposed one after another and a plurality pairs of different trapezium-shaped blocks 2 (see Figs. 2A and 2B) and 2' (see Figs. 3A and 3B) which are complementary to each other. The trapezium-shaped blocks 2 and 2' are disposed sequentially in face-to-face abutting relationship and transversely mounted on the endless band 1. In assembly, the trapezium-shaped block 2 is mounted transversely from one side of the endless band 1 in a direction perpendicular to the longitudinal direction of the endless band with its three-sided slot engaging the endless band 1, while the complementary trapezium-shaped block 2' from the opposite side edge of the endless band 1 in the opposite direction to the first mentioned direction with its three-sided slot engaging the endless band 1, thus preventing the endless band 1 from dropping off. Each of the trapezium-shaped blocks 2 and 2' has a surface which is in contact with the endless band 1. The trapezium-shaped block 2 has inclined lateral side surfaces 2a contactable with the inclined surfaces 5 defining the V-groove of the pulley 3 or 4. Similarly, the complementary trapezium-shaped block 2' has inclined lateral side surfaces 2'a contactable with the inclined surfaces 5 of the V-groove of the pulley 3 or 4.

The transmission V-belt can be used for transmitting a torque between the two pulleys 3 and 4 in which the spacing between the inclined surfaces 5 of the V-groove of each of the pulleys can be varied to provide a continuously variable reduction ratio. In such a V-belt transmission belt, power is substantially transmitted between the pulleys 3 and 4 by pushing forces between the trapezium-shaped blocks 2 and 2'. The primary pulley 3 drives the trapezium-shaped blocks 2 and 2' contacting with the inclined surfaces 4 of the V-groove thereof. The power is transmitted by a pushing force by an array of trapezium-shaped blocks 2 and 2' to the secondary pulley 4.

For preventing relative displacement of the array of trapezium-shaped blocks 2 and 2', each of the tapezium-shaped blocks 2 has projections 2b on one head side surface thereof with respect to the running direction of the band 1 and recesses 2a on the other head side surface thereof with respect to the running direction of the band 1 as shown in Figs. 2a and 2b, and each of the complementary trapezium-shaped blocks 2' has two projections 2'b on one head side surface thereof and two recesses 2'a on the other head side surface thereof as shown in Figs. 3A and 3B. In assembly, the projections 2b of the trapezium-shaped block 2 are inserted into the two recesses 2'c on the abutting head side surface of the adjacent complementary trapezium-shaped block 2' and the recesses 2c of the trapezium-shaped block 2 receive the projections 2'b on the abutting head side surface of the adjacent another complementary trapezium-shaped block 2'. With this coupling means, alignment of the trapezium-shaped blocks 2 and 2' is accomplished, thus preventing the occurrence of noise which would otherwise take place when the trapezium-shaped block comes into contact with the pulley.

Problems encountered in the transmission belt so far explained in connection with Figs. 1 through 3B are derived from the use of two kinds of trapezium-shaped blocks which are quite similar in configuration although the arrangement of two projections and two recesses are different. One of the problems is in increasing the manufacturing cost and complicating the parts management of the trapezium-shaped blocks. Other problem is that, during assembly work of transmission V-belt, it occurs frequently to pick out a different trapezium-shaped block by mistake resulting in poor efficiency in assembly work. GB—A—655 173 discloses a V-belt where the alternating blocks are identical. The blocks of this belt, however, have no recesses or projections. Another transmission V-belt consisting of trapezoidal blocks transversely mounted on an endless bend is disclosed in DE—A—2557 724.

For preventing relative displacement of the alignment of the blocks, the abutting head side surfaces of the adjacent trapezoidal blocks are structured, for example, in a wavy or zigzag form or in another curved manner, thus, fitted into each other resulting in a chain-like assembly.

However, manufacturing of such trapezoidal blocks having complicated head side surfaces is difficult and increased costs of production can be expected thereby.

According to the present invention, a transmission V-belt comprising:

an endless band; and

a plurality of trapezium-shaped blocks of identical construction transversely mounted on said endless band and arranged in face-to-face abutting relationship in a longitudinal direction of the endless band,

said trapezium-shaped blocks being disposed sequentially in a first position and a second position turned through 180 degrees from said first position about an axis perpendicular to a longitudinal plane of said endless band,

each of said trapezium-shaped blocks having two head side surfaces substantially perpendicular to the longitudinal direction of the endless band and having a projection and a recess on one of the head side surfaces thereof and a recess and a projection on the opposite head side surface thereof, said projection and recess on said one head side surface of said each trapezium-shaped block coupling with the recess and projection of the abutting head side surface of the adjacent trapezium-shaped block, respectively, said recess and projection on the opposite head side surface of said each trapezium-shaped block coupling with the projection and recess on the abutting head side surface of the other adjacent trapezium-shaped block.

An object of the present invention, thereof is to provide a transmission V-belt wherein a plurality of trapezium-shaped blocks of identical construction are transversely mounted on an endless belt in face-to-face relationship and disposed sequentially in a first position and a second position that is turned through 180 degrees from said first position about an axis perpendicular to a longitudinal plane of the endless band and the trapezium-shaped blocks are centered with each other.

Two embodiments of the invention will now be described, by way of example, with reference to the accompanying drawings, in which

Fig. 1 is a diagrammatic elevation of a transmission V-belt explained before;

Fig. 2A is a cross section of a trapezium-shaped block explained before having an endless band in its three-sided laterally opening slot and running between inclined surfaces of a V-groove of a pulley;

Fig. 2B is a side view of the trapezium-shaped block shown in Fig. 2A;

Fig. 3A is a similar view to Fig. 2A showing another trapezium-shaped block complementary to the trapezium-shaped block shown in Fig. 2A;

Fig. 3B is a side view of the trapezium-shaped block shown in Fig. 3A;

Fig. 4A is a top view of a first embodiment of a trapezium-shaped block according to the invention mounted transversely from the left hand side edge of an endless band and disposed in a first position;

Fig. 4B is a similar view to Fig. 2A illustrating the trapezium-shaped block shown in Fig. 4A;

Fig. 4C is a side view as viewing Fig. 4A along an arrow X;

Fig. 5 is a diagrammatic top elevation of a plurality of the trapezium-shaped blocks transversely mounted on the endless band one after another before they are brought into face-to-face abutting relationship;

Fig. 6A is a similar view to Fig. 4A showing a second embodiment of a trapezium-shaped block according to the invention;

Fig. 6B is a similar view to Fig. 4B illustrating the trapezium-shaped block shown in Fig. 6B;

Fig. 6C is a side view as viewing Fig. 6A along an arrow Y; and

Fig. 7 is a similar view to Fig. 5 showing the trapezium-shaped blocks shown in Fig. 6A.

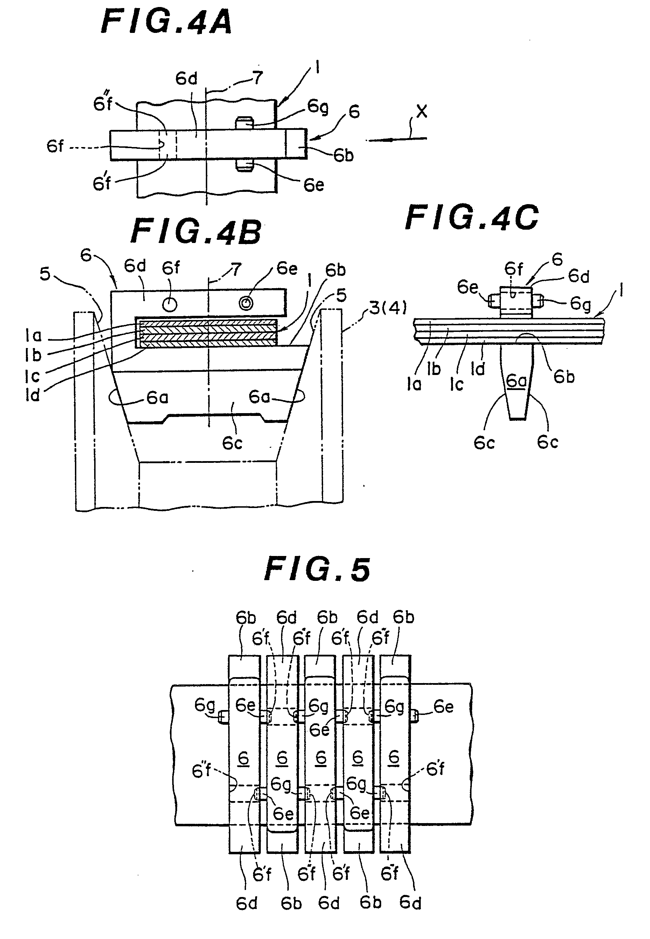

Referring to Figs. 4A, 4B, 4C and 5 illustrating one embodiment of the present invention, similar parts to those illustrated in Figs. 1 through 3 are denoted by the same reference numerals.

Referring to Figs. 4A, 4B, and 4C, each of trapezium-shaped blocks 6 is transversely mounted on the endless band 1 and has a generally trapezium-shaped configuration as shown in Fig. 4B having inclined lateral side surfaces 6a and also has a surface 6b frictionally contacting with an endless band 1 on the inner peripheral surface thereof. If each of the trapezium-shaped blocks 6 were the same in thickness, they would not smoothly follow a circular arc when they were to be entrained around the pulley 3 or 4 because the adjacent trapezium-shaped blocks 6 abut with each other on inward portions thereof in the vicinity of the center of rotation of the pulley 3 or 4. For preventing this, an edge of each of the trapezium-shaped blocks has inclined surfaces 6c on both head side surfaces thereof with respect to the running direction of the endless band 1, which inclined surfaces 6c become closer and closer toward each other as approaching toward the center of rotation of the pulley.

Each of the trapezium-shaped blocks 6 further includes an integrally formed hook 6d which rises from one side edge of the surface 6b that is remote from the center of rotation of the pulley 3 or 4 and extends in parallel to the upper surface to hang over the outer peripheral surface of the endless band 1, the thickness of the hook 6d being set equal to that of the remainder portion of the trapezium-shaped block 6. As shown in Fig. 4A and Fig. 4B, the hook 6d extends beyond the center plane 7 of the trapezium-shaped block 6. On one head side surface of the hook 6d with respect to the running direction of the endless band 1, a projection 6e and a recess 6f' are formed. In the illustrated embodiment the recess 6f' is defined by an open end of a through hole 6f. The projection 6e and recess 6f' are disposed on the opposite sides of the center plane 7 and equidistant therefrom. On the other head side surface of the hook 6d, a similar projection 6g and a similar recess 6f'' are formed. The projection 6g and recess 6f'' are aligned with the projection 6e and recess 6f', respectively, along the longitudinal direction of the endless band 1. Thus, the recess 6f'' is defined by the other open end of the through hole 6f. The diameter of the through hole 6f should be set a little larger than the diameter of the projection 6e or 6g, and furthermore the total of the amount of height of the projection 6e and that of the projection 6g is smaller than the thickness of the trapezium-shaped block 6.

A plurality of such trapezium-shaped blocks 6 are mounted transversely as shown in Fig. 5 on the endless band 1 and disposed in face-to-face abutting relationship in the longitudinal direction of the endless band 1. The trapezium-shaped blocks 6 are disposed sequentially in a first position and a second position which is turned through 180 degrees from the first position about an axis perpendicular to the longitudinal plane of the endless band 1 in which the endless band 1 lies. In assembly, one trapezium-shaped block 6 is mounted transversely from one side edge of the endless band 1 by inserting the endless band 1 into the three-sided slot defined by the surface 6b and the hook 6d, and a subsequent one trapezium-shaped block 6 is mounted from the opposite side edge of the endless band 1 transversely by inserting the endless band 1 into the three-sided slot defined by the surface 6b and the hook 6d. This arrangement wherein the trapezium-shaped blocks 6 embrace from the opposite sides of the endless band 1 prevents the endless band 1 from dropping off. For centering purpose, the projection 6e and recess 6f' on the one head side surface of each trapezium-shaped block 6 are coupled with the recess 6f' and projection 6e on the abutting head side surface of the adjacent trapezium-shaped block 6, while, the projection 6g and recess 6"f on the opposite head side surface of the trapezium-shaped block 6 are coupled with the recess 6"f and projection 6g on the opposite head side surface of the adjacent another trapezium-shaped block 6.

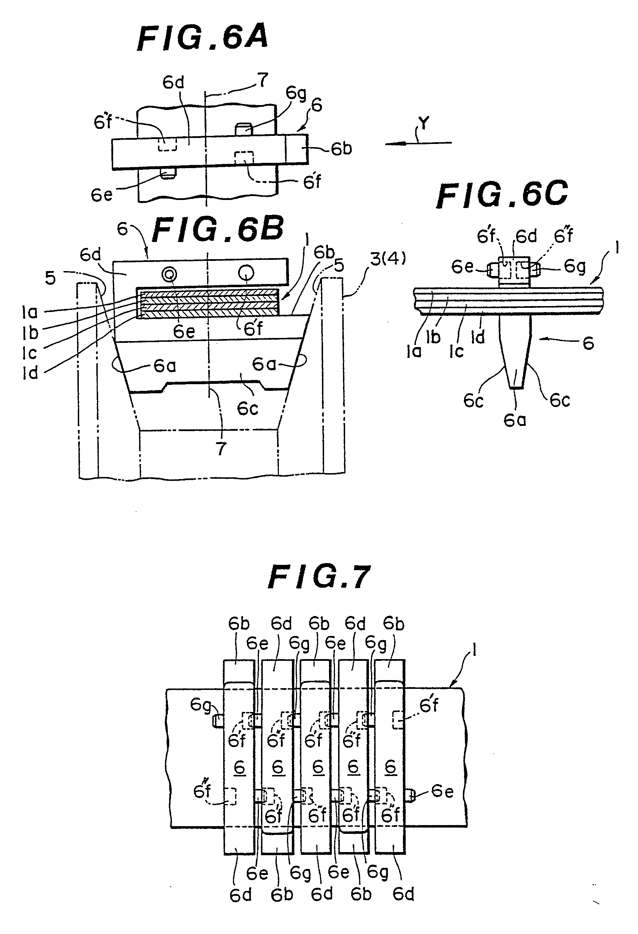

Referring to Figs. 6A, 6B, 6C and 7, the second embodiment is explained. As will be readily understood from the comparison of Fig. 6A with Fig. 4A, the second embodiment has been obtained from the first embodiment only by switching the location of a projection 6e with the location of a recess 6'f. Although not shown, the second embodiment can be obtained from the first embodiment by switching the location of a projection 6g with the location of a recess 6"f. As shown in Fig. 6a, the projection 6e and recess 6'f are aligned with the recess 6"f and projection 6g, respectively. As shown in Fig. 7, the trapezium-shaped blocks 6 are assembled with the projection 6e and recess 6'f coupled with the recess 6"f and projection 6g on the abutting head surface of the adjacently trapezium-shaped block 6 and with the recess 6"f and projection 6g coupled with the projection 6g and recess 6"f on the adjacent trapezium-shaped block 6.

It may well be understood that although in each of the above described embodiments, the projections 6e, 6g and recesses 6f', 6f" are formed on the hook 6d, they may be formed on the remaining portion of the trapezium-shaped block as long as the function of the V-belt in not hindered.

### Claims

1. A transmission V-belt comprising:
an endless band; and
a plurality of trapezium-shaped blocks (6) of identical construction transversely mounted on said endless band (1) and arranged in face-to-face abutting relationship in a longitudinal direction of the endless band (1),
said trapezium-shaped blocks (6) being disposed sequentially in a first position and a second position turned through 180 degrees from said first position about an axis perpendicular to a longitudinal plane of said endless band,
each of said trapezium-shaped blocks (6) having two head side surfaces substantially perpendicular to the longitudinal direction of the endless band (1) and having a projection (6e) and a recess (6f') on one of the head side surfaces thereof and a recess (6f") and a projection (6g) on the opposite head side surface thereof, said projection (6e) and recess (6f') on said one head side surface of said each trapezium-shaped block (6) coupling with the recess (6f') and projection (6e) of the abutting head side surface of the adjacent trapezium-shaped block (6), respectively, said recess (6f") and projection (6g) on the opposite head side surface of said each trapezium-shaped block (6) coupling with the projection (6g) and recess (6f") on the abutting head side surface of the other adjacent trapezium-shaped block (6).

2. A transmission V-belt as claimed in claim 1, characterized in that the projection (6e) on one head side surface of each of the trapezium-shaped block (6) is aligned with the projection (6g) on the opposite head side surface of said each block along the longitudinal direction of the endless band (1), and the recess (6f') on the one head side surface of the same each trapezium-shaped block (6) is aligned with the recess (6f") on the opposite head side surface of said each trapezium-shaped block (6).

3. A trapezium V-belt as claimed in claim 1, characterized in that the projection (6e) on one head side surface of each of the trapezium-shaped blocks (6) is aligned with the recess (6f") on the opposite head side surface of said each trapezium-shaped block (6), and the recess (6f') on the one head side surface of the same each trapezium-shaped block (6) is aligned with the projection (6g) on the opposite head side surface of said each trapezium-shaped block (6).

### Patentansprüche

1. Treibkeilriemen, mit:
einem endlosen Band, und
einer Mehrzahl trapezförmig gestalteter Blöcke (6) von gleichartigem Aufbau, die quer zur Laufrichtung des endlosen Bandes (1) an diesem montiert sind und in Längsrichtung des endlosen Bandes (1) unmittelbar aneinanderstoßen,
wobei die trapezförmig gestalteten Blöcke (6) aufeinanderfolgend in einer ersten Lage und in einer zur ersten Lage um 180° um eine zu einer Längsebene des endlosen Bandes senkrechten Achse gedrehten zweiten Lage angeordnet sind, wobei jeder der trapezförmig gestalteten Blöcke (6) zwei im wesentlichen senkrecht zur Längsrichtung des endlosen Bandes (1) orientierte Kopfseitenflächen mit einem Vorsprung (6e) und einer Ausnehmung (6f') an der einen Kopfseitenfläche und einer Ausnehmung (6f") und einem Vorsprung (6g) an der gegenüberliegenden Kopf-seitenfläche jedes trapezförmig gestalteten Blok-

kes (6) aufweist, und der Vorsprung (6e) und die Ausnehmung (6f') an der einen Kopfseitenfläche jedes trapezförmig gestalteten Blockes (6) jeweils mit der Ausnehmung (6f') und dem Vorsprung (6e) der anstoßenden Kopfseitenfläche des benachbarten, trapezförmig gestalteten Blockes (6) gekuppelt und die Ausnehmung (6f") und der Vorsprung (6g) an der gegenüberliegenden Kopfseitenfläche jedes trapezförmig gestalteten Blokkes (6) mit dem Vorsprung (6g) und der Ausnehmung (6f") der anstoßenden Kopfseitenfläche des anderen, benachbarten, trapezförmig gestalteten Blockes (6) gekuppelt ist.

2. Treibkeilriemen nach Anspruch 1, dadurch gekennzeichnet, daß der Vorsprung (6e) an der einen Kopfseitenfläche jedes trapezförmig gestalteten Blockes (6) fluchtend mit dem Vorsprung (6g) an der gegenüberliegenden Kopfseitenfläche dieses jeweiligen Blockes (6) in Längsrichtung des endlosen Bandes (1) angeordnet ist und die Ausnehmung (6f') an der einen Kopfseitenfläche desselben, trapezförmig gestalteten Blockes (6) fluchtend mit der Ausnehmung (6f") an der gegenüberliegenden Kopfseitenfläche dieses jeweiligen, trapezförmig gestalteten Blockes (6) ausgebildet ist.

3. Treibkeilriemen nach Anspruch 1, dadurch gekennzeichnet, daß der Vorsprung (6e) an der einen Kopfseitenfläche jedes der trapezförmig gestalteten Blöcke (6) fluchtend mit der Ausnehmung (6f") an der gegenüberliegenden Kopfseitenfläche dieses jeweiligen, trapezförmig gestalteten Blockes (6) und die Ausnehmung (6f') an der einen Kopfseitenfläche desselben trapezförmig gestalteten Blockes (6) fluchtend mit dem Vorsprung (6g) an der gegenüberliegenden Kopfseitenfläche dieses jeweiligen, trapezförmig gestalteten Blockes (6) ausgebildet ist.

**Revendications**

1. Courroie de transmission en V comprenant:
une bande sans fin; et
un certain nombre de blocs (6) en forme de trapèze de construction identique montés transversalement sur ladite bande sans fin (1) et agencés en relation d'aboutement face à face dans une direction longitudinale de la bande sans fin (1),

lesdits blocs (6) en forme de trapèze étant disposés séquentiellement en une première position et une seconde position tournée de 180 degrés par rapport à ladite première position autour d'un axe perpendiculaire à un plan longitudinal de ladite bande sans fin,

chacun desdits blocs en forme de trapèze (6) ayant deux surfaces côté tête sensiblement perpendiculaires à la direction longitudinale de la bande sans fin (1) et ayant une protubérance (6e) et un évidement (6f') sur l'une de leurs surfaces côté tête et un évidement (6f") et une protubérance (6g) sur la surface côté tête opposée, ladite protubérance (6e) et évidement (6f') sur ladite première surface côté tête de chaque bloc (6) en forme de trapèze se couplant à l'évidement (6f') et à la protubérance (6e) de la surface côté tête en aboutement du bloc en forme de trapèze (6) adjacent, respectivement, ledit évidement (6f") et la protubérance (6g) de la surface côté tête opposée de chaque bloc en forme de trapèze (6) se couplant avec la protubérance (6g) et l'évidement (6f") de la surface côté tête en aboutement de l'autre bloc (6) adjacent en forme de trapèze.

2. Courroie de transmission en V selon la revendication 1, caractérisée en ce que la protubérance (6e) d'une surface côté tête de chaque bloc (6) en forme de trapèze est alignée avec la protubérance (6g) de la surface côté tête opposée de chaque bloc (6) le long de la direction longitudinale de la bande sans fin (1) et l'évidement (6f') de la première surface côté tête de chaque bloc (6) en forme de trapèze est aligné avec l'évidement (6f") de la surface côté tête opposée de chaque bloc (6) en forme de trapèze.

3. Courroie de transmission en V selon la revendication 1, caractérisée en ce que la protubérance (6e) d'une surface côté tête de chaque bloc (6) en forme de trapèze est alignée avec l'évidement (6f") de la surface côté tête opposée de chaque bloc en forme de trapèze (6) et l'évidement (6f') de la surface côté tête du même bloc (6) en forme de trapèze est aligné avec la protubérance (6g) sur la surface côté tête opposée dudit bloc (6) en forme de trapèze.

*FIG.1*

0 073 962

## FIG.2A

## FIG.2B

## FIG.3A

## FIG.3B

2

**0 073 962**

**FIG.4A**

**FIG.4B**

**FIG.4C**

**FIG.5**

3

# FIG.6A

# FIG.6C

# FIG.6B

# FIG.7